Europäisches Patentamt

European Patent Office

Office européen des brevets

(19)

(11) Publication number: **0 010 892**
**B1**

(12) **EUROPEAN PATENT SPECIFICATION**

(45) Date of publication of patent specification: **17.11.82**

(21) Application number: **79302209.6**

(22) Date of filing: **15.10.79**

(51) Int. Cl.³: **C 13 L  1/08,** C 13 K  1/06,
C 12 P  19/00

(54) Process for cooking starchy material.

(30) Priority: **17.10.78 US 952071**

(43) Date of publication of application:
**14.05.80 Bulletin 80/10**

(45) Publication of the grant of the patent:
**17.11.82 Bulletin 82/46**

(84) Designated Contracting States:
**AT DE FR GB SE**

(56) References cited:
**FR - A - 1 391 011
US - A - 3 133 836
US - A - 3 661 640
US - A - 4 014 743**

(73) Proprietor: **Chambers, John Michael
541 Tremont Avenue
Westfield Union County New Jersey 07090 (US)**

(72) Inventor: **Chambers, John Michael
541 Tremont Avenue
Westfield Union County New Jersey 07090 (US)**

(74) Representative: **Sorrell, Terence Gordon et al,
Sorrell & Son Otham
Maidstone Kent ME15 8RR (GB)**

Courier Press, Leamington Spa, England.

# Process for cooking starchy material

This invention relates to a process for cooking starchy material. More particularly the invention relates to an improved process requiring much less steam for cooking starchy material to prepare the same for further processing in order to make final products such as alcohols and sugars by enzymatic fermentation and/or conversion, respectively, or other appropriate end-products by employing at least one or a plurality or series of preheating vessels or stages through which the material is passed before it is introduced into the cooker which is connected to at least one or a plurality or series of flash vessels or stages disposed downstream or after the cooker and into which the material is introduced after cooking by injection of high pressure steam directly to the cooker, the material being flashed in the flash vessel or vessels which are connected to corresponding preheating vessels or units for utilization of flashed vapor.

In the processing of starchy materials such as, for example, corn mash, to provide final products such as alcohols and sugars and the like by enzymatic fermentation and/or conversion, respectively, it is generally necessary to subject the basic raw starchy material to a cooking procedure in order to transform it into a more suitable state for further processing. Consequently, in the area of starch technology and other related fields where such technology applies, a wide variety of cooking procedures have been developed. While such cooking procedures have generally been commercially acceptable and, in fact, are in general use in current commercial operations, they normally require relatively large amounts of heat energy, usually in the form of high pressure steam, and relatively large boiler capacities to provide the same. For example, in a typical presently known cooking cycle in general use in industry, ground starchy material and water are introduced into a mixing tank, usually along with a small amount of enzyme such as alpha-amylase or similar liquefying agent to form a slurry. The slurry is pumped from the mixing tank into a cooker which is provided at the entrance with special mixing devices to rapidly add high pressure steam directly into the slurry in order to almost instantaneously raise the temperature thereof to the cooking temperature, passing through the critical zone of high viscosity due to initial gelatinization. The cooker outlet is provided with a variable restriction means to control the pressure and thus set the temperature therein. From the cooker the material is flashed in a first flash tank usually at slightly above atmospheric pressure giving some poor quality (high in entrained matter) steam that is seldom used effectively but more often a nuisance to vent or condense. From the first flash tank the cooked material is led to a second flash tank operated at temperatures suitable for conversion of the cooked material with a conversion enzyme such as beta-amylase or similar saccharifying agents, after which it is held in a conversion tank, then cooled and pumped to fermenters. All of the heat to raise the slurry from the mixing temperature to the cooking temperature is required in the form of high pressure steam and in this respect presently known systems and processes are disadvantageous. There exists, therefore, a need for an improved process for cooking starchy materials which does not exhibit the above-mentioned disadvantage. The present invention provides such a process.

In accordance with the present invention there is provided a process for cooking starchy material comprising mixing said starchy material and water in a mixing vessel, raising the temperature of the mixture to within 25°F. to 100°F (15° to 55°C.) of the final cooking temperature, introducing the mixture into a cooker, injecting high pressure steam directly into said cooker and raising the temperature of the mixture to the final desired cooking temperature while restricting the outlet of said cooker and maintaining the pressure therein, discharging the cooked material from the cooker through at least one flash vessel, flashing said cooked material in said flash vessel and lowering the temperature of said cooked material to within 25°F to 100°F (15° to 55°C) of the temperature of the incoming mixture of starchy material and water from said mixing vessel, characterised by passing the mixture of starchy material and water through one or a plurality of preheating vessels connected in series, and preheating the mixture in said preheating vessel or vessels by passing the steam generated during flashing from the flash vessel to the preheating vessel or from a plurality of flash vessels to the corresponding preheating vessels and adding the steam to the mixture.

It is to be understood that in accordance with the process of this invention there must be at least one preheating vessel and at least one flash vessel employed, there may be a plurality or series of preheating vessels and corresponding flash vessels employed in carrying out the process. Moreover, the amount or fraction of high pressure steam utilized by direct injection into the cooker will vary depending upon the number of preheating vessels or stages employed. For example, with one preheating vessel or stage, the high pressure steam requirement is 55%, two vessels or stages 38%, and three vessels or stages 29%. In general it has been found that the fraction of high pressure steam needed once the process has reached steady state condition, as compared to a process where steam from flashing is not used for preheating, corresponds to a fractional relationship represented by

$$\frac{1.15}{n+1}$$

where n is the number of preheating vessels or stages employed in carrying out the process.

Expressed in other terms the present invention provides an improved process for cooking starchy material comprising mixing the starchy material with water, thus forming an aqueous slurry or suspension of the starchy material, pumping the mixture through a preheating vessel or a plurality of preheating vessels prior to introduction of the same into a cooker, the heat for the preheating being derived from successive flashings of the mixture coming from the outlet of the cooker and raising the temperature of the initial mixture through nominally 1/2 for one stage, 2/3 for two stages, 3/4 for three stages, etc., of the total temperature increase from mix tank to cooker without the use of any high pressure steam, introducing the preheated mix into the cooker and directly injecting a correspondingly less amount of high pressure steam into the mixture and raising the mixture to the desired cooking temperature while maintaining the temperature by restricting the cooker outlet, passing the cooked mixture from the cooker outlet through successive flash tanks and lowering the temperature of the cooked material to conversion temperatures while supplying the vapor from the flash tanks to the preheating vessel or vessels. The first preheating step must raise the mix temperature to about 190°F. (88°C.) in order to be above the critical gelatinization temperature thereof and to permit pumping of the material so that it can flow further through the pipes and vessels of the system.

In order to illustrate the present invention more fully by way of example, attention is directed to the accompanying drawings which are to be taken in conjunction with the following description of the invention and wherein:

Fig. 1 is a flow sheet showing diagrammatically a cooking arrangement presently in use in commercial operations;

Fig. 2 is a flow sheet showing diagrammatically a cooking arrangement suitable for use in carrying out the process of this invention and incorporating one stage of preheating; and

Fig. 3 is a flow sheet showing diagrammatically a cooking arrangement suitable for use in carrying out the process of this invention and incorporating two stages of preheating.

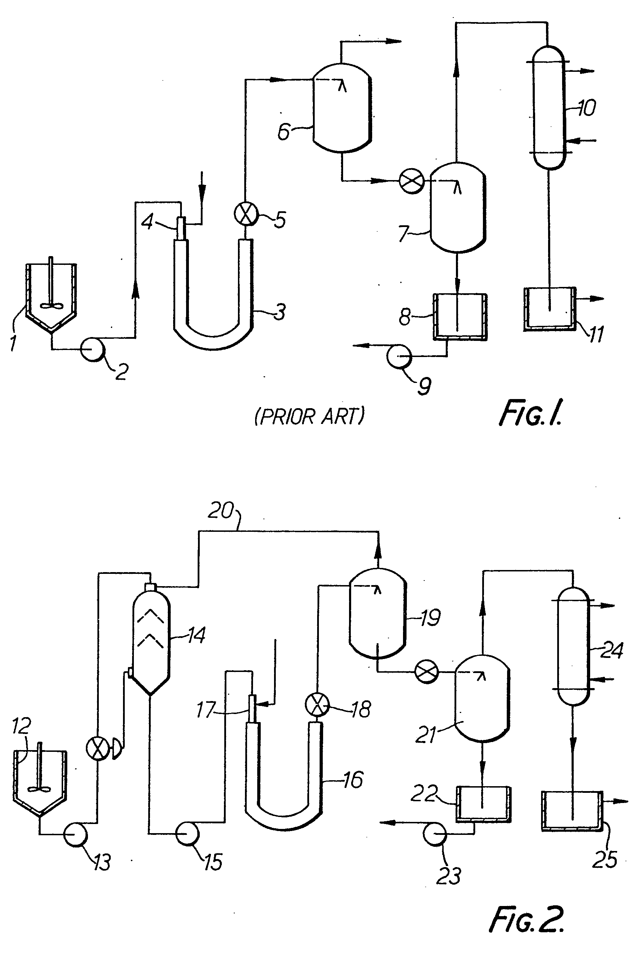

Turning more particularly to Fig. 1, the typical presently known cooking cycle shown there is one in which ground starchy material and water are introduced into a mixing tank 1 wherein a slurry or suspension of the starchy material is formed. The water employed is usually hot water at 120°F. to 140°F. (50°—60°C.) from condensers or other process equipment (not shown). If the temperature is too hot, dry starch powder will not be readily wet due to gelatinization at the surface. With some forms of starch, however, water at 150°F. (65°C.) or more may be satisfactory. There is usually also added a small amount of liquefying agent such as alpha-amylase or similar liquefying agent to partially break down the starch in the mixing tank. A high pressure pump 2 pumps the mixture of starchy material and water, that is the slurry or suspension, from the mixing tank into a cooker 3 which is simply a section of larger pipe or a vessel having one minute or more holding time. At the entrance to the cooker, special mixing devices 4 rapidly add high pressure steam directly into the mixture in order to almost instantaneously raise the temperature thereof to the cooking temperature, passing through the critical zones of high viscosity due to initial gelatinization. A variable restriction 5 at the outlet of the cooker controls the pressure in the cooker which in turn sets the temperature. The material leaving the cooker is flashed into a first flash tank 6 usually at slightly above atmospheric pressure giving some poor quality (high in entrained matter) steam that is seldom used effectively but more often a nuisance to vent or condense. A second flash tank or vessel 7 is operated at the desired temperature for conversion of the cooked material with a conversion agent such as beta-amylase or similar saccharifying agent. The second flash vessel is usually operated at about 145°F (63°C.) for malt or similar agents but may be at 170°F (75°C) for other agents. From the final flash tank 7, the material with enzyme is held in conversion tank 8 and pumped through a cooler (not shown) by pump 9 to the fermenters (not shown). Vapor from flash tank 7 is condensed in condenser 10 and the condensate is discharged from hot well 11. All of the heat to raise the mixture from the mixing temperature to the cooking temperature is required in the form of high pressure steam.

In contract, in accordance with the present invention, in the cooking cycle illustrated in Fig. 2, the starchy material and water are added to mixing tank 12 where the temperature of the mixture formed is raised to about 140°F. to 150°F. (60°—65°C.) and even as high as 170° (75°C.) and the mixture is pumped by a standard pump 13 into a preheater or preheating vessel 14 wherein the mixture is contacted with vapor from pipe 20 and flows cocurrently downward for intimate mixing, condensing the vapor while heating the slurry from 80% to 90% of the temperature difference between available vapor temperature and inlet slurry temperature and generally to about 190°F. (88°C.), above the critical gelatinization temperature of the starchy material. This approach will vary with design of the preheater and relative quantities of slurry being pumped. From preheater 14 the mixture is pumped by high pressure pump 15 into the cooker 16 where high pressure steam is added at inlet 17 and back pressure maintained by restriction 18 and the temperature of the mixture is raised to the final desired cooking temperature. From the outlet the cooked mixture flashes into flash tank or vessel 19 with flashed vapor flowing through line 20 into the preheater 14. From flash tank or vessel 19 the mixture flashes into final flash tank or vessel 21 operating at 145°F. (63°C.) where enzymes for saccharification are added, then into conversion tank 22 being pumped by pump 23 through coolers (not shown) and into the fermenter (not shown). Vapors from flash tank 21 are condensed in condenser 24 with condensate flowing to hot well 25 and thence out. High pressure steam required is only 56% of that required in the conventional process.

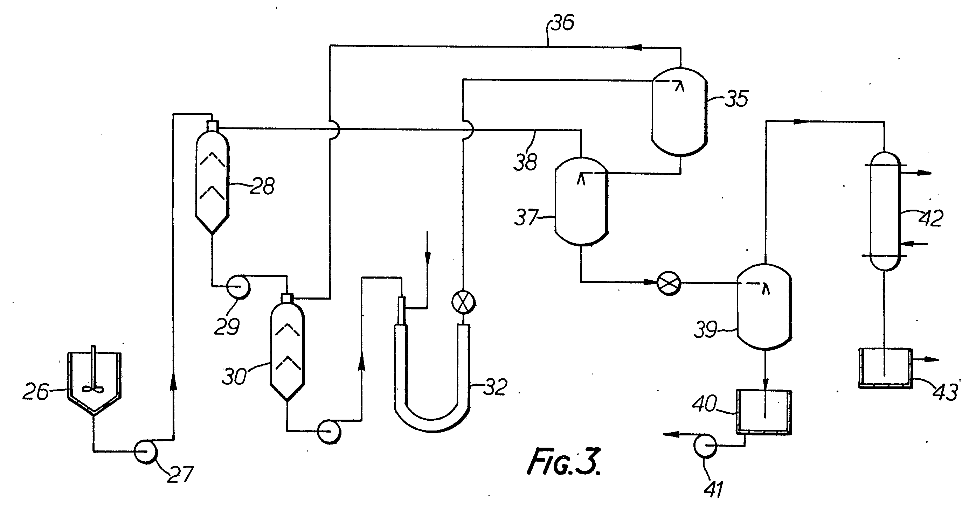

Figure 3 shows a similar cooking arrangement with two preheaters or vessels 28 and 30 to which a mixture of starchy material and water from mixing vessel 26 is pumped by pumps 27 and 29 and which preheaters are heated, respectively, with vapors carried through line 38 from flash tank or vessel 37 and through line 36 from flash tank or vessel 35. In each case the temperature of the mixture entering a preheater is raised to within 20% of the temperature of the heating vapor for that preheater. High pressure steam required in this unit is only 39% of that required by the conventional process. From the flash vessel 37, the cooked mixture flashes into final flash vessel 39 operating at 145°F. (63°C.) where enzymes for saccharification are added, then into conversion tank 40, being pumped by pump 41 through coolers (not shown) and into a fermenter (not shown). Vapors from flash vessel 39 are condensed in condenser 42 with condensate flow to hot well 43 and thence out.

It is to be understood that in accordance with the process of this invention, the starchy material is generally raised from a temperature in a range of from about 140°F. (60°C.) in the initial preheating vessel to a temperature in a range of about 190°F. (88°C.) and in the additional preheating vessels or stages, raised to a temperature in a range of from about 255°F. to 290°F. (125°—145°C.) and then raised to the final desired cooking temperature in a range of from about 300°F. to about 350°F. (150°—177°C.) or more by direct injection of steam into the starchy material in the cooker. In this regard, it is to be understood that the temperature in the cooker 32 may be in a range of from 212°F. (100°C.) to as high as about 350°F. (177°C.) or more and will depend upon the particular starchy material being cooked, the type of cooker and the final product desired. For example, when the final desired product is a whiskey which is not a highly refined distilled product, the temperature in the cooker may be maintained in a range of from 212°F. to about 230°F. (100° to 110°C.) and the pressure in the cooker 32 may be maintained slightly above atmospheric pressure. On the other hand, when cooking corn, milo or similar grains, in order to guard against degradation of the material being cooked, the cooking is carried out under moderate pressure and the temperature is maintained in a range of from about 230°F. to about 275°F. (110° to 136°C.). However, when rapid conversion is desired and the final product desired is, for example, a highly refined neutral spirit, the temperature in the cooker is generally maintained in a range of from about 275°F. to about 350°F (136°—177°C.) or more and the pressure in the cooker is increased as needed to maintain the desired temperature range. It will be appreciated in this respect that the particular temperature range suitable for cooking a particular starchy material is readily determinable by routine knowledge and calculation.

Furthermore, in accordance with the process of this invention the starchy material and water being introduced into the cooking vessel may be mixed in any convenient manner and may also contain suitable enzymes in suitable amounts, such as for example, alpha-amylase for liquefaction and/or beta-amylase for conversion to sugars.

In addition, it is to be understood that the starchy material employed in carrying out the process of this invention may come from a wide variety of sources. For example, it may be derived from corn, potatoes or grains or other similar products, as well as the naturally occurring starchy roots, all of which are known in the art. Where grains are cooked in accordance with the process of this invention, they may be used in the form of whole grain or ground grain.

It is also to be understood that while the system in the illustrative diagrammatic drawing accompanying this description of the process shows a cooking cycle with two or three stages of preheat, a greater number of such vessels can be employed.

The present invention presents many advantages. For example, it provides a process which can be carried out with less energy consumption with respect to boiler capacity needed. Moreover, while reducing the amount of steam required in a multi-stage cooking process for cooking starchy material, the process also permits recycling some of the heat to raise the temperature of incoming starchy material and lower the temperature cooked starchy material, the process balancing out with the same incremental temperature stages up and down. Numerous other advantages of this invention will be readily apparent to those skilled in the art.

**Claims**

1. A process for cooking starchy material comprising mixing said starchy material and water in a mixing vessel (12; 26), raising the temperature of the mixture to within 25°F, to 100°F (15° to 55°C.) of the final cooking temperature, introducing the mixture into a cooker (16; 32), injecting high pressure steam directly into said cooker, and raising the temperature of the mixture to the final desired cooking temperature while restricting the outlet of said cooker and maintaining the pressure therein, discharging the cooked material from the cooker through at least one flash vessel (19; 37), flashing said cooked material in said flash vessel and lowering the temperature of said cooked material to within 25°F. to 100°F (15° to 55°C.) of the temperature of the incoming mixture of starchy material and water from said mixing vessel, characterised by passing the mixture of starchy material and water through one (14) or a plurality of preheating vessels (28, 30) connected in series, and preheating the mixture in said preheating vessel or vessels by passing the steam generated during flashing from the flash vessel (19) to the preheating vessel (14) or from a plurality of flash vessels (35, 37) to the corresponding preheating vessels (28, 30) and adding the steam to the mixture.

2. A process according to claim 1 wherein the mixture of starchy material and water is raised to a temperature of about 140°F. to 150°F. (60 to 65°C.) in the mixing vessel.

3. A process according to claim 1 wherein alpha-amylase is added to the mixture of starchy material and water.

4. A process according to claim 1 wherein a liquefying enzyme is added to the mixture of starchy material and water and the mixture is raised to a temperature of about 170°F (75°C.) before the mixture enters the first preheater (14; 28).

5. A process according to claim 4 wherein the liquefying enzyme is alpha-amylase.

6. A process according to claim 1 wherein the temperature of the mixture, after the first preheater is above the critical gelatinization temperature of the material and at about 190°F (88°C.).

7. A process according to claim 1 wherein the starchy material is a whole grain.

8. A process according to claim 1 wherein the starchy material is ground grain.

9. A process according to claim 1 wherein a temperature of 212°F to 230°F. (100° to 110°C.) is maintained in the cooker.

10. A process according to claim 1 wherein a temperature of 230°F to 275°F (110° to 136°) is maintained in the cooker.

11. A process according to claim 1 wherein a temperature of 275°F to 350°F. (136° to 177°C) is maintained in the cooker.

12. A process according to claim 1 wherein a liquefying enzyme and a conversion enzyme is added to the mixture of starchy material and water.

13. A process according to claim 15 wherein the liquefying enzyme is alpha-amylase and the conversion enzyme is beta-amylase.

**Revendications**

1. Un procédé pour cuisson d'une matière amylacée comprenant: mélanger la-dite matière amylacée et de l'eau dans un récipient pour mélange (12, 26), augmenter la température du mélange jusqu'à de 15°C à 55°C (25°F à 100°F) de la température finale de cuisson, introduire le mélange dans un cuiseur (16, 32) injecter de la vapeur à haute pression directement à l'intérieur du-dit cuiseur, et augmenter la température du mélange jusqu'à obtention de la température finale désirée de cuisson tout en réduisant simultanément l'échappement de vapeur du-dit cuiseur et tout en maintenant la pression à l'intérieur du-dit cuiseur, vider la matière cuite du cuiseur dans au moins un récipient pour cuisson extrêmement rapide et à haute température (19, 37), cuire très rapidement et à haute température la-dite matière en cours de cuisson dans le-dit récipient pour cuisson extrêmement rapide et à haute température et diminuer la température de la-dite matière cuite jusqu'à de 15°C à 55°C (25°F à 100°F) de la température du mélange obtenu de la-dite matière amylacée et d'eau du-dit récipient pour mélange, caractérisé par le passage du mélange de la matière amylacée et d'eau à travers un (14) ou une pluralité de récipients de pré-chauffage (28, 30), reliés en série et pré-chauffant le mélange dans le-dit (ou les dits) récipient(s) de pré-chauffage en transférant la vapeur générée pendant la cuisson extrêmement rapide et à haute température du récipient pour cuisson extrêmement rapide et à haute température (19) au récipient de pré-chauffage (14) ou d'une pluralité de récipients pour cuisson extrêmement rapide et à haute température (35, 37) aux récipients de pré-chauffage correspondants (28, 30) et ajout de vapeur au mélange.

2. Un procédé, selon la revendication 1, dans lequel le mélange de la matière amylacée et d'eau est porté à une température s'élevant à environ 60°C—65°C (140°F à 150°F) dans le récipient pour mélange.

3. Un procédé, selon la revendication 1, dans lequel de l'alpha-amylase et ajoutée au mélange de la matière amylacée et d'eau.

4. Un procédé, selon la revendication 1, dans lequel une enzyme liquéfiante est ajoutée au mélange de la-dite matière amylacée et d'eau et dans lequel le mélange est porté à une température s'élevant à environ 75°C (170°F) préalablement à l'entrée du mélange dans le premier pré-chauffeur (14, 28).

5. Un procédé, selon la revendication 4, dans lequel l'enzyme liquéfiante est une alpha-amylase.

6. Un procédé, selon la revendication 1, dans lequel la température du mélange, après le premier pré-chauffage se trouve au-dessus de la température critique de gélatinisation de la matière et à environ 88°C (190°F).

7. Un procédé, selon la revendication 1, dans lequel la matière amylacée est une graine complète.

8. Un procédé, selon la revendication 1, dans lequel la matière amylacée est une graine moulue.

9. Un procédé, selon la revendication 1, dans lequel une température de 100°C à 110°C (212°F à 230°F) est maintenue dans le cuiseur.

10. Un procédé, selon la revendication 1, dans lequel une température de 110°C à 136°C (230°F à 275°F) est maintenue dans le cuiseur.

11. Un procédé, selon la revendication 1, dans lequel une température de 136°C à 177°C (275°F à 350°F) est maintenue dans le cuiseur.

12. Un procédé selon la revendication 1, dans lequel une enzyme liquéfiante et une enzyme de conversion sont ajoutées au mélange de la matière amylacée et d'eau.

13. Un procédé selon la revendication 12, dans lequel l'enzyme liquéfiante est une alpha-amylase et l'enzyme de conversion est une béta-amylase.

## Patentansprüche

1. Ein Herstellungsvorgang um kohlenhydratische Mittel zu kochen, umfasst das Mischen von Staerkemittel und Wasser in einem Mischbehaelter (12; 26), die Temperatur der Mischung bis zu zwischen 25° und 100°F (15° und 55°C) von der Endkochzeit erhoehen, Mischung in den Ofen geben (16; 32), Dampfhochdruck in den besagten Ofen injekzieren und Temperatur der Mischung auf gewuenschte Endkochzeittemperatur erhöhen waehrend der Abzug vom besagten Ofen begrenzt wird damit der Druck im Ofen erhalten bleibt, gekochtes Mittel aus dem Ofen in mindestens einen Strahlenofen geben (19; 37), besagte Mischung blitzkochen im Strahlenofen und die Temperatur des besagten gekochten Mittels auf 25° bis 100°F (15° bis 55°C) erniedrigen zu der Temperatur von der einfliessenden Mischung aus Staerkemittel und Wasser, aus dem besagten Mischgeraet, gekennzeichnet durch den Durchlauf von Mischung aus Staerkemittel und Wasser durch einen oder mehreren vorgeheizten Oefen '28, 30) in einer Verbundreihe, und Mischung vorheizen in besagtem vorgeheizten Behaelter (14) oder Behaeltern (28, 30) durch Dampfzufluss, der waehrend des Blitzkochens vom Strahlenofen (19) oder mehreren Strahlenoefen (35, 37) erzeugt wurde, und Dampf der Mischung zufuegen.

2. Ein Herstellungsvorgang gemaess Anspruch 1, in dem die Mischung von Staerkemittel und Wasser auf eine Temperatur von ungefaehr 140°F zu 150°F (60° zu 65°C) erhoehrt wird im Mischbehaelter.

3. Ein Herstellungsvorgang gemaess Anspruch 1, in dem Alpha-Amyl der Mischung von Staerkemittel und Wasser hinzugefuegt wird.

4. Ein Herstellungsvorgang gemaess Anspruch 1 in dem ein Verfluessigungsferment der Mischung von Staerkemittel und Wasser hinzugefuegt wird und die Temperatur der Mischung auf ungefaehr 170°F (75°C) erhoeht wird bevor die Mischung in den ersten Vorheizer geht (14, 28).

5. Ein Herstellungsvorgang gemaess Anspruch 4, in dem das Verfluessigungsferment Alpha-Amyl ist.

6. Ein Herstellungsvorgang gemaess Anspruch 1, in dem die Temperatur der Mischung nach dem ersten Vorheizer, ueber der kritischen Gelatinierungstemperatur des Mittels und auf ungefaehr 190°F (88°C) ist.

7. Ein Herstellungsvorgang gemaess Anspruch 1, in dem das Staerkemittel Vollkorn ist.

8. Ein Herstellungsvorgang gemaess Anspruch 1, in dem das Staerkemittel gemahlenes Korn ist.

9. Ein Herstellungsvorgang gemaess Anspruch 1, in dem die Temperatur von 212°F zu 230°F (100 zu 110°C) im Ofen beibehalten wird.

10. Ein Herstellungsvorgang gemaess Anspruch 1, in dem die Temperatur von 230° zu 275°F (110° zu 136°C) beibehalten wird.

11. Ein Herstellungsvorgang gemaess Anspruch 1, in dem die Temperatur von 275° zu 350°F (136° zu 177°C) im Ofen beibehalten wird.

12. Ein Herstellungsvorgang gemaess Anspruch 1, in dem die Verfluessigungsferment und ein Umwandlungsferment der Mischung aus Staerkemittel und Wasser hinzugefuegt wird.

13. Ein Herstellungsvorgang gemaess Anspruch 12, in dem das Verfluessigungsferment Alpha-Amyl und das Umwandlungsferment Beta-Amyl ist.

(PRIOR ART)

*Fig. l.*

*Fig. 2.*

Fig.3.

0010 892